# EUROPEAN PATENT SPECIFICATION

(11) **EP 4 380 244 B1**
(45) Date of publication and mention of the grant of the patent: **07.10.2026**
(21) Application number: 22857593.2
(22) Date of filing: 03.08.2022
(51) Int. Cl.: H04W 52/02, H04L 69/22, H04W 56/00

(54) **POWER-SAVING FOR ASYNCHRONOUS LINK RECEPTION**
ENERGIEEINSPARUNG BEIM EMPFANG EINER ASYNCHRONEN VERBINDUNG
ÉCONOMIE D'ÉNERGIE POUR LA RÉCEPTION D'UNE LIAISON ASYNCHRONE

(30) Priority: 20.08.2021 CN 202110963288
(43) Date of publication of application: 05.06.2024
(73) Proprietor: Huawei Technologies Co., Ltd., Shenzhen, Guangdong 518129 (CN)
(72) Inventor: HE, Qingchun, Shenzhen, Guangdong 518129 (CN); CHENG, Xingqing, Shenzhen, Guangdong 518129 (CN); GAO, Lei, Shenzhen, Guangdong 518129 (CN)
(74) Representative: Maiwald GmbH
(86) International application number: PCT/CN2022/110027
(87) International publication number: WO 2023/020281

(56) References cited:
- CN-A- 1 333 968
- CN-A- 105 933 083
- CN-A- 111 264 079
- CN-A- 112 839 090
- US-A1- 2010 045 511
- US-A1- 2010 045 511
- SIEMENS: "Synch/Asynch comparison", 3GPP DRAFT; R2-041316 - SYNCH-ASYNCH COMPARISON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Cannes; 20040625, 25 June 2004 (2004-06-25), Mobile Competence Centre ; 650, route des Lucioles ; F-06921 Sophia-Antipolis Cedex ; France , XP050112075

## Description

### CROSS-REFERENCE TO RELATED APPLICATIONS

This application claims priority to Chinese Patent Application No. 202110963288.2, filed with the China National Intellectual Property Administration on August 20, 2021, and entitled "COMMUNICATION METHOD AND APPARATUS".

### TECHNICAL FIELD

This application relates to the field of wireless communication technologies, and in particular, to a communication method and apparatus.

### BACKGROUND

In some existing wireless communication technologies, an asynchronous link (that is, a connection-oriented asynchronous link) is first established between a first communication device (for example, a main control node) and a second communication device (for example, a terminal node) to transmit control signaling and asynchronous data. Transmission on the link is reliable. In other words, the first communication device transmits a new data packet only after receiving an acknowledgment (Acknowledge, ACK) fed back by the second communication device, or after a data packet retransmission quantity reaches a preset maximum retransmission quantity, or a packet discarding condition is met. Transmission time of each data packet is wide.

For a service like audio that has a strict requirement on a transmission time sequence, a synchronization link (that is, a connection-oriented synchronization link) is defined in a communication system, to transmit an "isochronous" data stream. In other words, each frame of data can be transmitted only within limited time. If the second communication device fails to receive the data within the limited time, the first communication device also performs new transmission of data in a next time period based on preconfigured time. Therefore, transmission on the synchronization link is unreliable.

Because of characteristics of the synchronization link, control signaling of the synchronization link needs to be transmitted through the reliable asynchronous link. Each synchronization link is associated with one asynchronous link. The first communication device and the second communication device need to simultaneously maintain both the synchronization link and the asynchronous link associated with the synchronization link. The second communication device receives the asynchronous link at a predetermined moment based on a configured asynchronous link receiving period. This causes high power consumption of the second communication device.

United States patent application US 2010/0045511 A1 relates to an architecture designed for electronic systems having a plurality of processing nodes in which each node provides a function or part of a function implemented by the system. This architecture is based on one single synchronization link which supplies all the modules with a common synchronization message containing synchronization information and a simplified header. There are a plurality of asynchronous data interchange links. Each link allows a message interchange between two specific processing nodes, with the interchanged messages having data to be processed, accompanied by a generic header. The asynchronous links' generic header includes all the information relating to the system's operating step to which the interchanged data refer. The synchronous link's simplified header makes it possible to determine the data stream to which the associated synchronization information applies. Each processing node has means suitable for interfacing with the synchronous and asynchronous links.

### SUMMARY

Embodiments of this application provide a communication method, apparatus, computer-readable storage medium, and computer program product, to reduce power consumption of a communication device.

The invention is set out in the appended set of claims.

According to a first aspect, a communication method is provided, including: A first communication device receives first indication information sent by a second communication device, where the first indication information is carried on a synchronization link; and the first communication device stops, based on the first indication information, receiving an asynchronous link, where the asynchronous link is associated with the synchronization link.

It may be understood that when scheduling for the first communication device does not exist on the asynchronous link, the first communication device may not need to listen to the asynchronous link. Therefore, in this case, the first indication information may also be expressed as indicating that the scheduling for the first communication device does not exist on the asynchronous link.

In the foregoing implementation, the second communication device (for example, a main control node) indicates, by using the first indication information, the first communication device (for example, a terminal node) to stop receiving the asynchronous link, to reduce power consumption of the first communication device. **In** comparison with that the first communication device receives the asynchronous link based on a configured asynchronous link receiving period, in the foregoing solution, the second communication device may indicate the first communication device to stop receiving the asynchronous link, thereby improving system flexibility and reducing power consumption of the first communication device.

**In** a possible implementation, the first indication information is included in a physical layer header of a first synchronization link frame. The method further includes: The first communication device parses the physical layer header of the first synchronization link frame, and the first communication device obtains the first indication information from the physical layer header of the first synchronization link frame.

In a possible implementation, the first indication information is included in a higher layer payload header of a first synchronization link frame. The method further includes: The first communication device parses the higher layer payload header of the first synchronization link frame, and the first communication device obtains the first indication information from the higher layer payload header of the first synchronization link frame.

In a possible implementation, the stopping, based on the first indication information, receiving an asynchronous link includes: The first communication device stops, based on the first indication information after a first time offset, receiving the asynchronous link.

Optionally, a time length indicated by the first time offset is greater than or equal to 0. When the time length indicated by the first time offset is 0, the first communication device immediately stops, after obtaining the first indication information, receiving the asynchronous link; or when the time length indicated by the first time offset is greater than 0, the first communication device stops, from time at which the first indication information is obtained to time indicated by the first time offset, receiving the asynchronous link. By using the foregoing solution, effective time of an operation of stopping receiving the asynchronous link may be flexibly specified.

In a possible implementation, after the receiving first indication information sent by a second communication device, the method further includes: starting a timer; and if the timer times out, the first communication device starts receiving the asynchronous link.

In a possible implementation, after the receiving first indication information sent by a second communication device, the method further includes: starting a timer, and if second indication information sent by the second communication device is received during running of the timer, starting receiving the asynchronous link.

In the foregoing implementation, after the first communication device stops receiving the asynchronous link, if the second indication information indicating to start receiving the asynchronous link is not received within long time, the first communication device may automatically start receiving the asynchronous link, to avoid a problem that receiving the asynchronous link cannot be restarted when the second indication information is lost.

In a possible implementation, after that the first communication device stops, based on the first indication information, receiving an asynchronous link, the method further includes: The first communication device receives the second indication information sent by the second communication device; and the first communication device starts, based on the second indication information, receiving the asynchronous link.

In a possible implementation, the second indication information is included in a physical layer header of a second synchronization link frame. The method further includes: The first communication device parses the physical layer header of the second synchronization link frame, and the first communication device obtains the second indication information from the physical layer header of the second synchronization link frame.

In a possible implementation, the second indication information is included in a higher layer payload header of a second synchronization link frame. The method further includes: The first communication device parses the higher layer payload header of the second synchronization link frame, and the first communication device obtains the second indication information from the higher layer payload header of the second synchronization link frame.

In a possible implementation, the starting, based on the second indication information, receiving an asynchronous link includes: The first communication device starts, based on the second indication information after a second time offset, receiving the asynchronous link.

Optionally, a time length indicated by the second time offset is greater than or equal to 0. When the time length indicated by the second time offset is 0, the first communication device immediately starts, after obtaining the second indication information, receiving the asynchronous link; or when the time length indicated by the second time offset is greater than 0, the first communication device starts, from time at which the second indication information is obtained to time indicated by the second time offset, receiving the asynchronous link. By using the foregoing solution, effective time of an operation of starting receiving the asynchronous link may be flexibly specified.

In a possible implementation, the first indication information may further indicate to stop receiving a control link; and the first communication device further stops, based on the first indication information, receiving the control link. In a possible implementation, the second indication information may further indicate to start receiving the control link; and the first communication device further starts, based on the second indication information, receiving the control link. The second communication device uses the control link to allocate resources of the synchronization link and/or the asynchronous link to the first communication device. More specifically, the second communication device uses the control link to send semi-static configuration information of the synchronization link and/or the asynchronous link to the first communication device. The semi-static configuration information may be, for example, a transmission pattern (pattern) of synchronization link/asynchronous link transmission. The transmission pattern indicates a transmission interval (interval) of the synchronization link/asynchronous link of the second communication device and a transmission interval (interval) of the synchronization link/asynchronous link of the first communication device.

According to a second aspect, a communication method is provided, including: A second communication device sends first indication information to a first communication device, where the first indication information is carried on a synchronization link. The first indication information indicates to stop receiving an asynchronous link, and the asynchronous link is associated with the synchronization link.

In a possible implementation, the first indication information is included in a physical layer header of a first synchronization link frame.

In a possible implementation, the first indication information is included in a higher layer payload header of a first synchronization link frame.

In a possible implementation, the second indication information further indicates to stop receiving a control link.

In a possible implementation, the method further includes: The second communication device sends second indication information to the first communication device, where the second indication information is carried on the synchronization link, and the second indication information indicates to start receiving the asynchronous link.

In a possible implementation, the second indication information is included in a physical layer header of a second synchronization link frame.

In a possible implementation, the second indication information is included in a higher layer payload header of a second synchronization link frame.

In a possible implementation, the second indication information further indicates to start receiving the control link.

In a possible implementation, before the second communication device sends a first synchronization link frame to the first communication device, the method may further include the following operations.

The second communication device determines, based on auxiliary information sent by the first communication device, that the first communication device needs to be indicated to stop receiving the asynchronous link; or the second communication device determines, based on a load status of the second communication device, that the first communication device needs to be indicated to stop receiving the asynchronous link; or the second communication device determines, based on a transmission capability of the first communication device, that the first communication device needs to be indicated to stop receiving the asynchronous link; or the second communication device determines, based on power consumption of the second communication device and/or power consumption of the first communication device, that the first communication device needs to be indicated to stop receiving the asynchronous link.

According to a third aspect, a communication apparatus is provided, including a processing unit and a transceiver unit. The transceiver unit is configured to receive first indication information sent by a second communication device, where the first indication information is carried on a synchronization link. The processing unit is configured to control, based on the first indication information, the transceiver unit to stop receiving an asynchronous link, where the asynchronous link is associated with the synchronization link. In a possible scenario, the communication apparatus may be a battery, a chip in a battery, or an integrated circuit.

In a possible implementation, the first indication information is included in a physical layer header of a first synchronization link frame. The processing unit is specifically configured to: parse the physical layer header of the first synchronization link frame, and obtain the first indication information from the physical layer header of the first synchronization link frame.

In a possible implementation, the first indication information is included in a higher layer payload header of a first synchronization link frame; and the processing unit is specifically configured to: parse the higher layer payload header of the first synchronization link frame, and obtain the first indication information from the higher layer payload header of the first synchronization link frame.

In a possible implementation, the processing unit is specifically configured to: control, based on the first indication information after a first time offset, the transceiver unit to stop receiving the asynchronous link.

In a possible implementation, the first indication information may further indicate to stop receiving a control link, and the processing unit is further configured to control, based on the first indication information, the transceiver unit to stop receiving the control link.

In a possible implementation, the processing unit is further configured to: after the transceiver unit receives the first indication information, start a timer; and if running of the timer times out, control the transceiver unit to start receiving the asynchronous link.

In a possible implementation, the processing unit is further configured to: after the transceiver unit receives the first indication information, start a timer; and if the transceiver unit receives, during running of the timer, second indication information sent by the second communication device, control the transceiver unit to start receiving the asynchronous link.

In a possible implementation, the transceiver unit is further configured to: after stopping receiving the asynchronous link, receive second indication information sent by the second communication device; and the processing unit is further configured to control, based on the second indication information, the transceiver unit to start receiving the asynchronous link.

In a possible implementation, the second indication information is included in a physical layer header of a second synchronization link frame. The processing unit is configured to: parse the physical layer header of the second synchronization link frame, and obtain the second indication information from the physical layer header of the second synchronization link frame.

In a possible implementation, the second indication information is included in a higher layer payload header of a second synchronization link frame; and the processing unit is specifically configured to: parse the higher layer payload header of the second synchronization link frame, and obtain the second indication information from the higher layer payload header of the second synchronization link frame.

In a possible implementation, the processing unit is specifically configured to: control, based on the second indication information after a second time offset, the transceiver unit to start receiving the asynchronous link.

In a possible implementation, the second indication information may further indicate to start receiving the control link; and the processing unit is further configured to control, based on the second indication information, the transceiver unit to start receiving the control link.

According to a fourth aspect, a communication apparatus is provided, including a transceiver unit. The transceiver unit is configured to send first indication information to a first communication device, where the first indication information is carried on a synchronization link. The first indication information indicates to stop receiving an asynchronous link, and the asynchronous link is associated with the synchronization link. In a possible scenario, the communication apparatus may be a battery management system, a chip in a battery management system, or an integrated circuit.

In a possible implementation, the first indication information is included in a physical layer header of a first synchronization link frame.

In a possible implementation, the first indication information is included in a higher layer payload header of a first synchronization link frame.

In a possible implementation, the first indication information further indicates to stop receiving a control link.

In a possible implementation, the transceiver unit is further configured to send second indication information to the first communication device, where the second indication information is carried on the synchronization link, and the second indication information indicates to start receiving the asynchronous link.

In a possible implementation, the second indication information is included in a physical layer header of a second synchronization link frame.

In a possible implementation, the second indication information is included in a higher layer payload header of a second synchronization link frame.

In a possible implementation, the second indication information further indicates to start receiving the control link.

According to a fifth aspect, a communication apparatus is provided, including one or more processors and an interface circuit. When instructions of one or more computer programs are executed by the one or more processors, the communication apparatus is enabled to perform the method according to any one of the first aspect or the second aspect.

According to a sixth aspect, a terminal is provided, including the communication apparatus according to the fifth aspect.

According to a seventh aspect, a computer-readable storage medium is provided. The computer-readable storage medium includes a computer program, and when the computer program runs on a computing device, the computing device is enabled to perform the method according to any one of the first aspect or the second aspect.

According to an eighth aspect, a computer program product is provided. When the computer program product is invoked by a computer, the computer is enabled to perform the method according to any one of the first aspect or the second aspect.

For beneficial effects of the second aspect to the eighth aspect, refer to beneficial effects of the first aspect. Details are not described again.

### BRIEF DESCRIPTION OF DRAWINGS

FIG. 1 is a schematic diagram of an architecture of a communication system to which this application is applicable;
FIG. 2 is a schematic diagram of an open system interconnection (OSI) model of a communication device according to an embodiment of this application;
FIG. 3 is a schematic diagram of data receiving and sending time sequences of a synchronization link and an asynchronous link in conventional communication;
FIG. 4 is a schematic flowchart of a communication method according to an embodiment of this application;
FIG. 5a and FIG. 5b each are a schematic diagram of a first synchronization link frame according to an embodiment of this application;
FIG. 6a and FIG. 6b each are a schematic diagram of a second synchronization link frame according to an embodiment of this application;
FIG. 7 is a schematic flowchart of a communication method according to an embodiment of this application;
FIG. 8 is a schematic diagram of receiving and sending time sequences of synchronization link and asynchronous link data processing according to an embodiment of this application;
FIG. 9 and FIG. 10 each are a schematic diagram of a structure of a communication apparatus according to an embodiment of this application;
FIG. 11 is a schematic diagram of a structure of a terminal according to an embodiment of this application; and
FIG. 12 is a schematic diagram of a structure of a communication apparatus according to an embodiment of this application.

### DESCRIPTION OF EMBODIMENTS

Embodiments of this application may be applied to a wireless communication system, for example, may be applied to a short-range communication system.

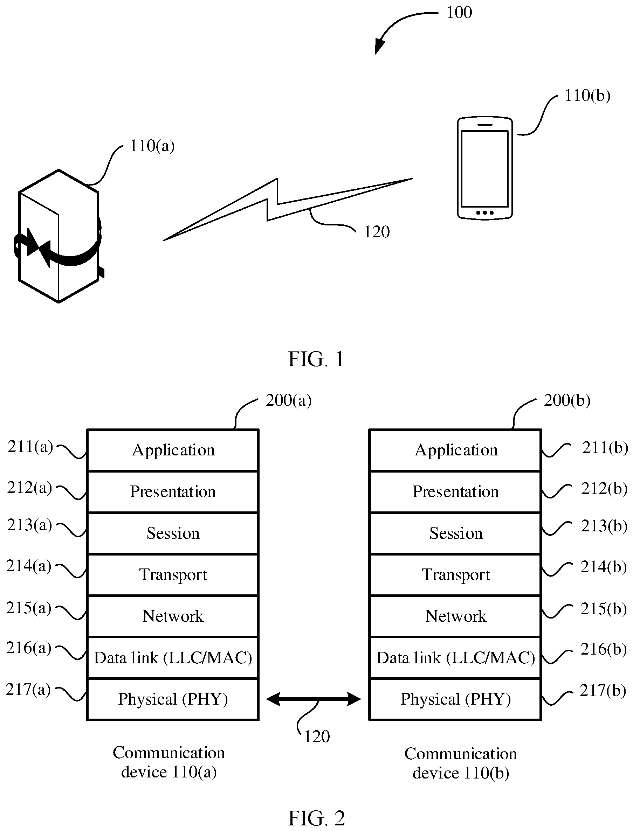

FIG. 1 is a block diagram of an example of a communication system 100 that may implement an embodiment of this application. The communication system 100 includes a communication device 110(a), and the communication device 110(a) is coupled to a communication device 110(b) by using a communication link 120. The communication device 110(b) may exchange data with the communication device 110(a) by using the communication link 120. The communication link 120 may be established between the communication device 110(a) and the communication device 110(b) based on a wireless communication protocol, so that the communication device 110(a) and the communication device 110(b) may communicate with each other.

The communication device 110(a) and the communication device 110(b) may be any suitable electronic device that can be networked and support wireless communication. For example, the communication device 110(a) may be a computer, a gateway, an access point, a controller, or the like. The communication device 110(b) may be a mobile phone, a personal digital assistant (PDA), a set-top box, a game console, an in-vehicle terminal, or the like. A smart home application scenario is used as an example. As a terminal node, the communication device 110(b) may include a smart home device (such as a Bluetooth speaker). As a main control node, the communication device 110(a) is configured to control the smart home device, for example, includes a controller or a home gateway. A smart terminal application scenario is alternatively used as an example. As the main control node, the communication device 110(a) may be a smartphone, a tablet computer, or the like. As the terminal node, the communication device 110(b) may include a Bluetooth headset or the like. The foregoing communication architecture may alternatively be applied to another scenario, for example, a smart manufacturing application scenario. This is not listed one by one herein.

Certainly, the communication device 110(a), the communication device 110(b), and the communication link 120 are merely example components of a network. This is because the network may further include any quantity of suitable devices to form a larger network (including, for example, a local area network (LAN), a wide area network (WAN), a wireless LAN (WLAN)), and/or may be connected to the Internet.

FIG. 2 is a block diagram of an open systems interconnection (OSI) model 200(a, b) of the communication device 110(a) and the communication device 110(b) in FIG. 1. The OSI model 200(a, b) is divided into seven logical layers (or referred to as a seven-layer protocol stack), including an application layer 211(a, b), a presentation layer 212(a, b), and a session layer 213(a, b), a transport layer 214(a, b), a network layer 215(a, b), a data link layer 216(a, b), and a physical layer 217(a, b) from top to bottom. The OSI model 200(a, b) may be used to represent the communication device 110(a) and the communication device 110(b).

The physical layer 217(a, b) provides electrical and physical specifications for interaction between the communication devices 110(a), 110(b) and the communication link 120, including, for example, pin layouts and signal voltages. The data link layer (or referred to as the link layer) 216(a, b) provides functional and/or procedural provisions for data transmission between the communication device 110(a) and the communication device 110(b), for example, addressing and channel access control mechanisms. The data link layer 216(a, b) has two sublayers that include a logical link control (logical link control, LLC) layer and a media access control (media access control, MAC) layer from top to bottom. For simplicity, the data link layer 216(a, b) is also referred to as the MAC layer. The data link layer encapsulates data packets from the network layer into frames (frames). Each frame includes a header and payload, the header includes necessary control information (for example, transmit end address information and receive end address information), and the payload part includes contents of the data packet.

FIG. 2 shows only an OSI seven-layer protocol model. The communication devices in embodiments of this application may alternatively use another network protocol model. For example, a five-layer protocol model may be used. The five-layer protocol model includes an application layer, a transport layer, a network layer, a link layer, and a physical layer (also referred to as an entity layer) from top to bottom. A definition of the link layer in the five-layer protocol model is basically the same as that of the data link layer in the OSI seven-layer protocol model, and a definition of the physical layer in the five-layer protocol model is basically the same as that in the OSI seven-layer protocol model. It should be noted that, in addition to the foregoing OSI seven-layer protocol model and the foregoing five-layer protocol model, other protocol models still exist or may exist in the conventional technology and future evolution technologies. It may be understood that a protocol model followed by a communication apparatus to which the solutions provided in this application are applied is not limited to the foregoing possible protocol model, and may be any possible protocol model that can support communication in this application.

In the solutions provided in this application, an upper layer of the physical layer, that is, the data link layer (or referred to as the link layer), is referred to as a higher layer, or a plurality of layers including at least the data link layer are collectively referred to as a higher layer. It may be understood that the "higher layer" in embodiments of this application is relative to the physical layer, and a specific meaning of the "higher layer" in embodiments of this application may be determined based on a used protocol model.

In the communication system, the communication link between the communication devices may include an asynchronous link and a synchronization link, and may further include a control link.

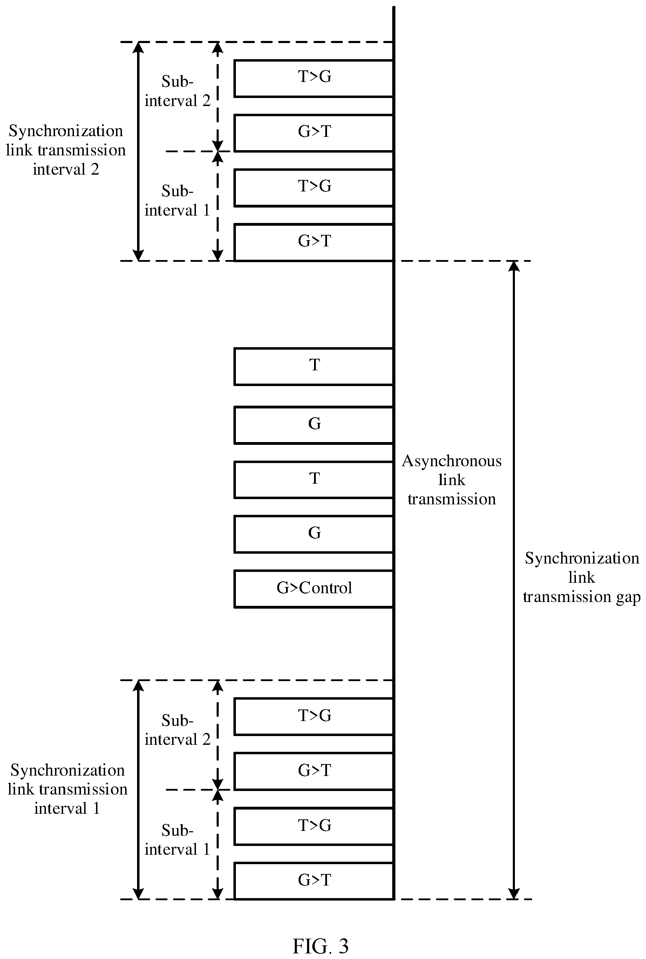

The communication devices receive and send data based on a specific time sequence, including a synchronization link transmission interval and an asynchronous link transmission interval. **In** other words, transmission between the communication devices in the synchronization link transmission interval is referred to as synchronization link transmission. It may be understood that the communication devices perform transmission by using the synchronization link. Transmission between the communication devices in the asynchronous link transmission interval is referred to as asynchronous link transmission. It may be understood that the communication devices perform transmission by using the asynchronous link. FIG. 3 is an example of a schematic diagram of data receiving and sending time sequences of a synchronization link and an asynchronous link.

As shown in FIG. 3, a synchronization link transmission interval 1 (interval 1 or referred to as pattern 1) and a synchronization link transmission interval 2 (interval 2 or referred to as pattern 2) are data transmission intervals of the synchronization link. The synchronization link transmission interval 1 and the synchronization link transmission interval 2 may separately include two sub-intervals (sub-intervals or referred to as sub patterns). Data transmission in one sub-interval includes transmission (represented as G>T in FIG. 3) from a main control node (the main control node is represented as G in FIG. 3) to a terminal node (the terminal node is represented as T in FIG. 3), and transmission (represented as in FIG. 3 as T>G) from the terminal node to the main control node.

A size of a time gap between the synchronization link transmission interval 1 and the synchronization link transmission interval 2 is determined, and may be used for data transmission on an asynchronous link. A time slice used for the data transmission on the asynchronous link between the synchronization link transmission interval 1 and the synchronization link transmission interval 2 may be referred to as an asynchronous link transmission interval. Data transmission in the asynchronous link transmission interval includes control frame transmission (represented as G-control in FIG. 3). The main control node may indicate, to the terminal node by using a control frame, a transmission resource allocated to the terminal node, or send scheduling information to the terminal node.

The communication devices may use a manner of repeat transmission to improve transmission reliability. For example, a data packet (for example, a synchronization link frame) may be transmitted for a plurality of times. For the data packet, first transmission may be referred to as initial transmission or new transmission, and subsequent repeat transmission may be referred to as retransmission.

When the communication device is in a connected mode, the synchronization link is established based on a connected-mode asynchronous link. In the connected mode, the established synchronization link is also referred to as a connected-mode synchronization link, and the asynchronous link is also referred to as a connected-mode asynchronous link. After the connected-mode asynchronous link is released, the connected-mode synchronization link is also released. After the connected-mode synchronization link is released, the connected-mode asynchronous link is not affected.

The synchronization link is applicable to isochronous data transmission. The receive end or the transmit end may know in advance a receive interval or a transmit interval of the receive end or the transmit end in a time interval, that is, the receive end or the transmit end receives or sends data at a preconfigured moment almost periodically. For example, in the synchronization link transmission gap shown in FIG. 3, to send a new data packet at a next moment, a quantity of transmission times of a data packet on a synchronization link is limited. In other words, data is flushed (flush) after several times of retransmission. From this perspective, time between two times of new transmission is fixed. Because of a limited quantity of the retransmission, synchronization link transmission is also considered as unreliable transmission.

Compared with the synchronization link, the asynchronous link has burst sending and receiving time. To be specific, there is no strict time requirement between two times of new transmission of data packets, and whether the transmission is new transmission of data or retransmission (including a receiving process and a sending process) is determined based on scheduling indication. For example, if the scheduling indication does not indicate the new transmission of data, the data retransmission may continue. From this perspective, reliability of the asynchronous link is higher than that of the synchronization link.

A frame corresponding to the control link is a control frame, and the control frame is used to semi-statically configure a transmission resource. The control frame is transmitted periodically. Each control frame is configured with a large time slice. During this time slice, a plurality of times of uplink and downlink transmission occur. For example, the second communication device may send the control frame by using the control link, to allocate a synchronization link resource and/or an asynchronous link resource to the first communication device. For example, the second communication device may send semi-static configuration information of the synchronization link and/or semi-static configuration information of the asynchronous link to the first communication device by using the control link. The semi-static configuration information of the synchronization link may be, for example, a transmission pattern (pattern) of synchronization link transmission. The transmission pattern indicates a location of a synchronization link transmission interval (interval) of the second communication device and a location of a synchronization link transmission interval (interval) of the first communication device. The semi-static configuration information of the asynchronous link may be, for example, a transmission pattern (pattern) of asynchronous link transmission. The transmission pattern indicates a location of an asynchronous link transmission interval (interval) of the second communication device and a location of an asynchronous link transmission interval (interval) of the first communication device.

The terminal node receives the asynchronous link (for example, receives a control frame transmitted on the asynchronous link) in the asynchronous link transmission interval based on a configured asynchronous link receiving period, to obtain a resource allocated by the main control node to the terminal node or scheduling information. Even when the main control node does not perform data scheduling or valid data transmission on the terminal node in the asynchronous link transmission interval, the terminal node still receives the asynchronous link in the asynchronous link transmission interval, thereby increasing power consumption of the terminal node.

Therefore, embodiments of this application provide a communication method and apparatus, so that a main control node can control a terminal node to stop receiving or start receiving an asynchronous link. Compared with that the terminal node receives the asynchronous link in each asynchronous link transmission interval based on an asynchronous link receiving period, power consumption of the terminal node can be reduced by using embodiments of this application.

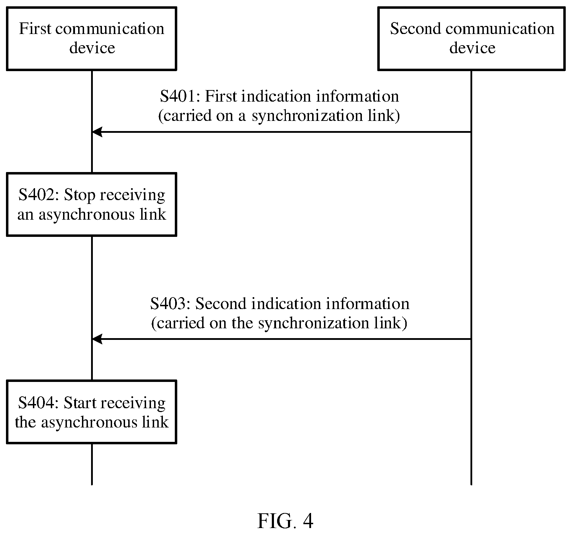

FIG. 4 is a schematic flowchart of a communication method according to an embodiment of this application. In this procedure, a synchronization link and an asynchronous link are established between a first communication device and a second communication device. Further, establishment time of the asynchronous link is earlier than establishment time of the synchronization link. The synchronization link is established based on the asynchronous link, and the synchronization link established based on the asynchronous link is associated with the asynchronous link. A control frame transmitted on the asynchronous link may schedule or allocate a resource for synchronization link data transmission between the first communication device and the second communication device. In this procedure, the second communication device is configured to control the first communication device to receive the asynchronous link. The second communication device may be a main control node, and the first communication device may be a terminal node.

As shown in FIG. 4, the procedure may include the following steps.

S401: The second communication device sends first indication information to the first communication device, where the first indication information is carried on the synchronization link.

The first indication information indicates to stop receiving the asynchronous link. It may be understood that stopping receiving the asynchronous link may be understood as stopping detecting the asynchronous link.

Optionally, the first indication information may be one or more bits of indication information. For example, the first indication information is one bit, and the first indication information may be a bit whose value is "0".

In some embodiments, the first indication information is included in a physical layer header of a first synchronization link frame. The first communication device parses the physical layer header of the first synchronization link frame, and obtains the first indication information from the physical layer header of the first synchronization link frame.

Optionally, the physical layer header may be a header of a physical layer protocol data unit (protocol data unit, PDU). Based on a hierarchical network structure, such as the OSI model shown in FIG. 2, each layer of a sending system (or a sending device) establishes data units. The data units include information from an upper layer and information attached to an entity of a current layer, and are transferred to a layer lower than the current layer. The receiving system (or the receiving device) transmits these data units from bottom to top, and separates related information from the data units at each layer of a protocol stack.

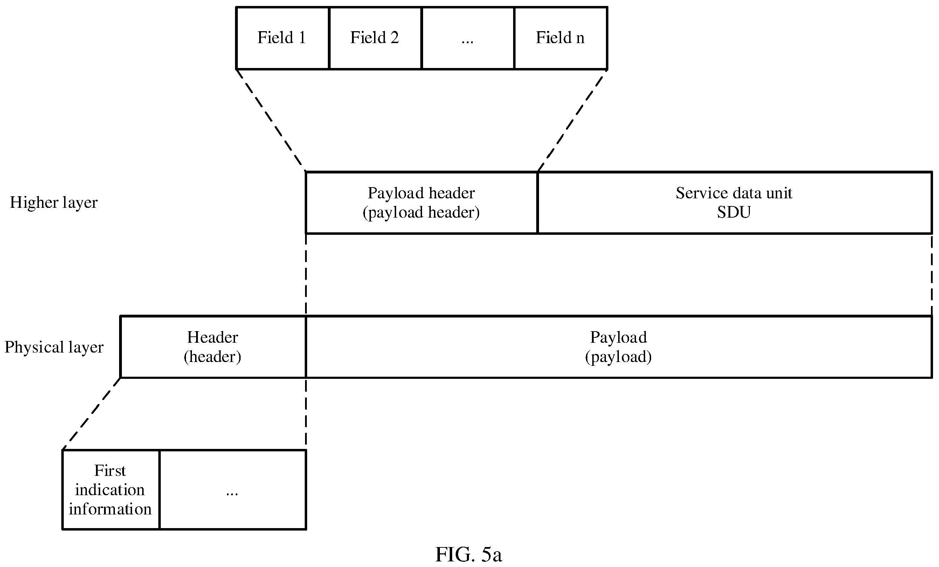

FIG. 5a is an example of a schematic diagram of a structure of the first synchronization link frame. As shown in FIG. 5a, the second communication device serves as a transmit end device of the first synchronization link frame. A higher layer entity (such as a data link layer entity or a MAC layer entity) in a protocol stack of the second communication device adds a payload header (payload header) to a service data unit (service data unit, SDU) obtained from an upper layer, to obtain a PDU, and transfer the PDU to a physical layer. After obtaining the PDU from a data link layer or a MAC layer, a physical layer entity uses the PDU as a payload (payload), adds a physical layer header (header) before the payload (payload) to form the first synchronization link frame, and sends the first synchronization link frame on a physical channel. The physical layer header (header) includes the first indication information. A specific location of the first indication information in the physical layer header is not limited in this embodiment of this application.

The first communication device serves as a receive end device of the first synchronization link frame, and receives the first synchronization link frame from the physical channel. The first synchronization link frame includes the physical layer header and the payload. The payload is the PDU of the upper layer (for example, the data link layer or the MAC layer) of the physical layer. The physical layer entity parses the physical layer header to obtain the first indication information, removes the physical layer header, and delivers the payload to the data link layer or the MAC layer for processing. The payload may include the payload header and the SDU. The payload header may include one or more fields. The data link layer or MAC layer entity obtains related information of the SDU based on the payload header, and delivers the SDU to the upper layer of the data link layer or MAC layer entity for processing.

It may be understood that the first synchronization link frame is a data structure transmitted on the synchronization link, and may also be referred to as a first data packet, a first message, or the like. A name of the data structure is not limited in this embodiment of this application. Certainly, in embodiments of this application, the first indication information may also be transmitted in another data format.

In some other embodiments, the first indication information is included in a payload header of a first synchronization link frame. The first communication device parses the payload header of the first synchronization link frame at a higher layer to obtain the first indication information.

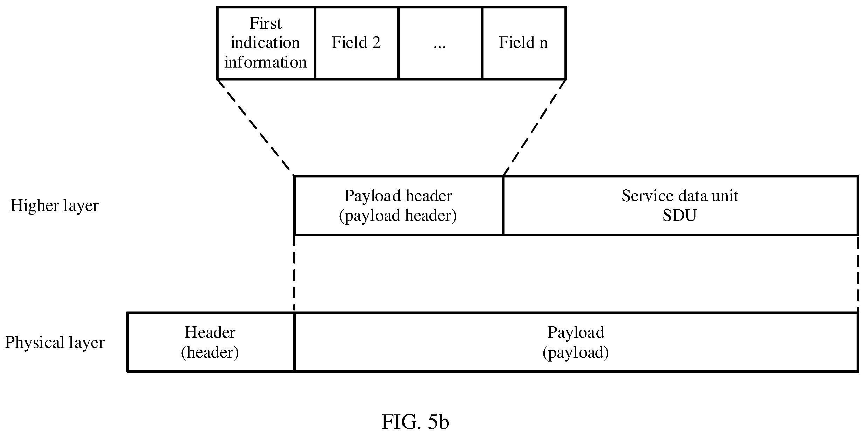

FIG. 5b is an example of a schematic diagram of a structure of the first synchronization link frame. As shown in FIG. 5b, the second communication device serves as a transmit end device of the first synchronization link frame. A higher layer such as a data link layer or a MAC layer in a protocol stack of the second communication device adds a payload header (payload header) to an SDU obtained from an upper layer of the higher layer to obtain a PDU, and transfers the PDU to a physical layer. The payload header includes the first indication information. A specific location of the first indication information in the payload header is not limited in this embodiment of this application. After obtaining the PDU from the data link layer or the MAC layer, a physical layer entity uses the PDU as a payload (payload), adds a physical layer header (header) before the payload (payload) to form the first synchronization link frame, and sends the first synchronization link frame on a physical channel.

The first communication device serves as a receive end device of the first synchronization link frame, and receives the first synchronization link frame from the physical channel. The first synchronization link frame includes the physical layer header and the payload. The payload is the PDU obtained after the higher layer (for example, the data link layer or referred to as the MAC layer) adds the payload header (payload header) to the SDU from the upper layer of the higher layer (for example, the data link layer or the MAC layer). The physical layer entity removes the physical layer header and delivers the payload (that is, the PDU) to the data link layer or MAC layer. The payload (that is, the PDU) includes the payload header and the SDU. After receiving the payload, a data link layer or MAC layer entity parses the payload header to obtain the first indication information, removes the payload header, and transfers the SDU in the payload to the upper layer of the data link layer or MAC layer entity for processing. The payload header may include one or more fields. The data link layer or MAC layer entity obtains related information of the SDU based on the payload header, and delivers the SDU to the upper layer of the data link layer or MAC layer entity for processing.

In step S401, the second communication device sends the first indication information to the first communication device in a synchronization link transmission interval. The data receiving and sending time sequences of the synchronization link and the asynchronous link shown in FIG. 3 are used as examples. During "G>T" transmission of one or more sub-intervals in one synchronization link transmission interval, the second communication device (for example, the main control node G) may add the first indication information to the physical layer header or a higher layer payload header, and send the first indication information to the first communication device.

Optionally, before sending the first indication information, the second communication device may determine whether a condition for indicating the first communication device to stop receiving the asynchronous link is met. If it is determined that the condition is met, the second communication device sends the first indication information to the first communication device to indicate the first communication device to stop receiving the asynchronous link.

For example, the condition for determining whether to indicate the first communication device to stop receiving the asynchronous link may include the following.
(1) Whether to schedule the first communication device or allocate a transmission resource to the first communication device. The second communication device may determine, based on the condition, whether to indicate the first communication device to stop receiving the asynchronous link. For example, if the second communication device determines that the first communication device does not need to be scheduled, the second communication device may indicate the first communication device to stop receiving the asynchronous link.
   It may be understood that when scheduling information for the first communication device does not need to be sent on the asynchronous link, the first communication device may not need to receive the asynchronous link. Therefore, in this case, the first indication information may also be expressed as indicating that scheduling for the first communication device does not exist on the asynchronous link.
(2) Whether auxiliary information sent by the first communication device indicates that the first communication device can be indicated to stop receiving the asynchronous link. The second communication device may determine, based on the auxiliary information sent by the first communication device, whether to indicate the first communication device to stop receiving the asynchronous link. For example, if the auxiliary information sent by the first communication device indicates that a battery level of the first communication device is low (for example, lower than a set threshold), the scheduling for the first communication device may be temporarily stopped, and the first communication device may be indicated to stop receiving the asynchronous link.
(3) Whether load of the second communication device is higher than a set threshold. The second communication device may determine, based on the load of the second communication device, whether to indicate the first communication device to stop receiving the asynchronous link. For example, if the load of the second communication device is high (for example, higher than the set threshold), the scheduling for the first communication device may be temporarily stopped, and the first communication device may be indicated to stop receiving the asynchronous link.
(4) Whether a transmission capability of the first communication device indicates that the first communication device can be indicated to stop receiving the asynchronous link. The second communication device may determine, based on the transmission capability of the first communication device, whether to indicate the first communication device to stop receiving the asynchronous link. For example, if the transmission capability of the first communication device is limited or low, the scheduling for the first communication device is stopped, and the first communication device may be indicated to stop receiving the asynchronous link.
(5) Whether power consumption of the second communication device is higher than a set threshold, and/or whether power consumption of the first communication device is higher than a set threshold. The second communication device may determine, based on the power consumption of the second communication device and/or the power consumption of the first communication device, whether to indicate the first communication device to stop receiving the asynchronous link. For example, if the power consumption of the second communication device is high and/or the power consumption of the first communication device is high, the scheduling for the first communication device may be temporarily stopped, and the first communication device may be indicated to stop receiving the asynchronous link.

The foregoing determining conditions may be used in any combination. To be specific, when the foregoing two or more conditions are met, the second communication device determines that the first communication device needs to be indicated to stop receiving the asynchronous link. For example, if the transmission capability of the first communication device is low, and the power consumption of the first communication device is high, the second communication device indicates the first communication device to stop receiving the asynchronous link. It may be understood that the foregoing merely lists several examples of manners of determining whether the first communication device needs to be indicated to stop receiving the asynchronous link. Embodiments of this application are not limited to the foregoing manners.

S402: The first communication device stops, based on the first indication information, receiving the asynchronous link, where the asynchronous link is associated with a synchronization link that carries the first indication information.

Optionally, the first communication device may stop, based on the first indication information after a first time offset, receiving the asynchronous link. The first time offset may be preconfigured. By setting the first time offset, the first communication device can stop a receiving operation on the asynchronous link after a period of time after receiving the first indication information, thereby improving system flexibility.

Optionally, the first communication device may stop, after a first time offset starting from a first moment, receiving the asynchronous link. For example, the first moment may be a moment at which the first indication information is obtained through parsing. For example, if the first indication information is included in the physical layer header of the first synchronization link frame, the first moment may be a moment at which the first indication information is obtained by parsing the physical layer header of the first synchronization link frame. If the first indication information is included in the higher layer payload header of the first synchronization link frame, the first moment may be a moment at which the first indication information is obtained by parsing the higher layer payload header of the first synchronization link frame. Alternatively, the first moment may be a moment at which the first synchronization link frame including the first indication information is received. For example, after receiving the first synchronization link frame, the first communication device records current time as receiving time of the first synchronization link frame. If the first indication information is obtained by parsing the physical layer header or the higher layer payload header of the first synchronization link frame, the recorded receiving time of the first synchronization link frame is used as the first moment.

Optionally, a time length indicated by the first time offset is greater than or equal to 0. When the time length indicated by the first time offset is 0, the first communication device may immediately stop, after obtaining the first indication information, receiving the asynchronous link; or when the time length indicated by the first time offset is greater than 0, the first communication device stops, from time at which the first indication information is obtained to time indicated by the first time offset, receiving the asynchronous link. By using the foregoing solution, effective time of an operation of stopping receiving the asynchronous link may be flexibly specified.

According to the procedure shown in FIG. 4, the second communication device (for example, the main control node) adds the first indication information to the first synchronization link frame, to indicate the first communication device (for example, the terminal node) to stop receiving the asynchronous link, to reduce power consumption of the first communication device. By using the foregoing solution, the second communication device may indicate the first communication device to stop receiving the asynchronous link, and in particular, when the scheduling information for the first communication device does not exist on the asynchronous link, indicate the first communication device to stop receiving the asynchronous link. Compared with that the first communication device receives the asynchronous link based on the configured asynchronous link receiving period, this can reduce power consumption of the first communication device, and further improve system flexibility.

After indicating, by using the first indication information, the first communication device to stop receiving the asynchronous link, the second communication device may further send second indication information to the first communication device, to indicate the second communication device to start receiving the asynchronous link. For example, when the second communication device needs to perform transmission scheduling on the first communication device, the second indication information may be sent to the first communication device, so that the first communication device re-receives the asynchronous link to obtain the scheduling information.

Refer to FIG. 4. After step S402, optionally, the method may further include the following steps.

S403: The second communication device sends the second indication information to the first communication device, where the second indication information is carried on the synchronization link.

The second indication information indicates to start receiving the asynchronous link. It may be understood that starting receiving the asynchronous link may be understood as starting detecting the asynchronous link.

Optionally, the second indication information may be one or more bits of indication information. For example, the second indication information is one bit. The second indication information may be a bit whose value is "1", to distinguish from the first indication information whose value is one bit with a value of "0".

Optionally, in some embodiments, the second indication information is included in a physical layer header of a second synchronization link frame. The first communication device parses the physical layer header of the second synchronization link frame, and obtains the second indication information from the physical layer header of the second synchronization link frame.

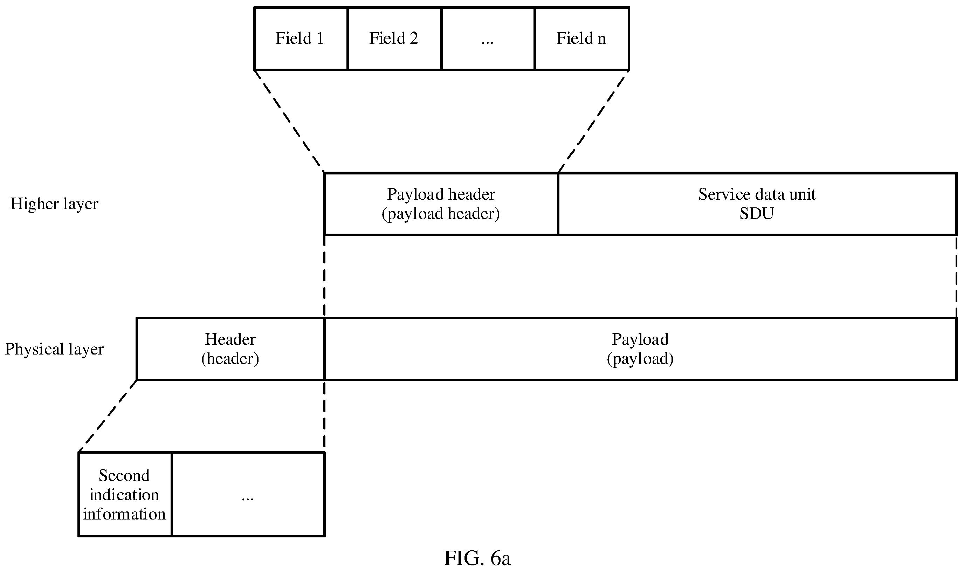

Optionally, the physical layer header may be a header of a physical layer PDU. FIG. 6a is an example of a schematic diagram of a structure of the second synchronization link frame. As shown in FIG. 6a, the second communication device serves as a transmit end device of the second synchronization link frame. A higher layer such as a data link layer or a MAC layer in a protocol stack of the second communication device adds a payload header (payload header) to an SDU obtained from an upper layer of the higher layer to obtain a PDU, and transfers the PDU to a physical layer. After obtaining the PDU from the data link layer or the MAC layer, a physical layer entity uses the PDU as a payload (payload), adds a physical layer header (header) before the payload (payload) to form the second synchronization link frame, and sends the first synchronization link frame on a physical channel. The physical layer header (header) includes the second indication information. A specific location of the second indication information in the physical layer header is not limited in this embodiment of this application.

The first communication device serves as a receive end device of the second synchronization link frame, and receives the second synchronization link frame from the physical channel. The second synchronization link frame includes the physical layer header and the payload. The payload is the PDU obtained after the higher layer (for example, the data link layer or referred to as the MAC layer) adds the payload header (payload header) to the SDU from the upper layer of the higher layer (for example, the data link layer or the MAC layer). The physical layer entity parses the physical layer header to obtain the second indication information, removes the physical layer header, and delivers the payload to the data link layer or the MAC layer for processing. The payload may include the payload header and the SDU. The payload header may include one or more fields. The data link layer or MAC layer entity obtains related information of the SDU based on the payload header, and delivers the SDU to the upper layer of the data link layer or MAC layer entity for processing.

It may be understood that the second synchronization link frame is a data structure transmitted on the synchronization link, and may also be referred to as a second data packet, a second message, or the like. A name of the data structure is not limited in this embodiment of this application. Certainly, in embodiments of this application, the second indication information may also be transmitted in another data format.

In some other embodiments, the second indication information is included in a payload header of a second synchronization link frame. The first communication device parses the payload header of the second synchronization link frame at a higher layer to obtain the second indication information.

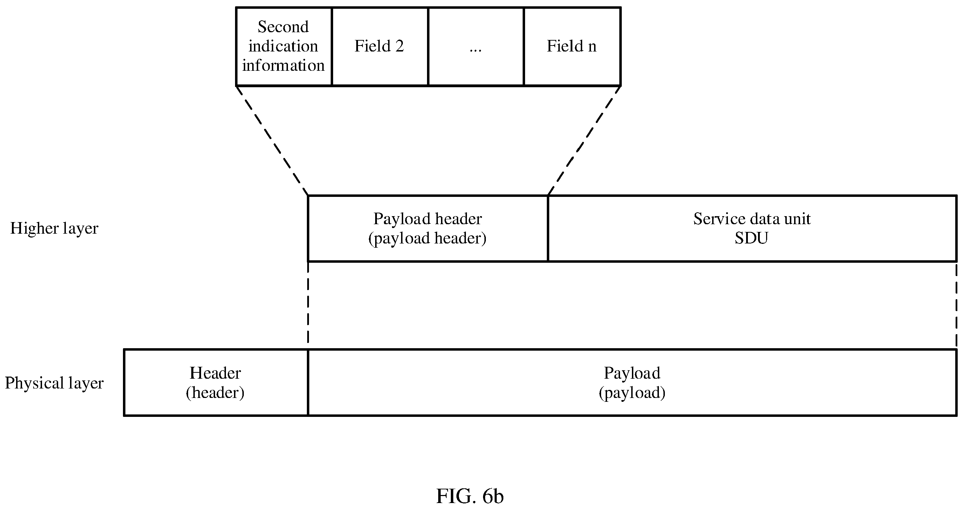

FIG. 6b is an example of a schematic diagram of a structure of the second synchronization link frame. As shown in FIG. 6b, the second communication device serves as a transmit end device of the second synchronization link frame. A higher layer such as a data link layer or a MAC layer in a protocol stack of the second communication device adds a payload header (payload header) to an SDU obtained from an upper layer of the higher layer to obtain a PDU, and transfers the PDU to a physical layer. The payload header includes the second indication information. A specific location of the second indication information in the payload header is not limited in this embodiment of this application. After obtaining the PDU from the data link layer or the MAC layer, a physical layer entity uses the PDU as a payload (payload), adds a physical layer header (header) before the payload (payload) to form the second synchronization link frame, and sends the first synchronization link frame on a physical channel.

The first communication device serves as a receive end device of the second synchronization link frame, and receives the second synchronization link frame from the physical channel. The second synchronization link frame includes the physical layer header and the payload. The payload is the PDU of the upper layer (for example, the data link layer or the MAC layer) of the physical layer. The physical layer entity removes the physical layer header and delivers the payload (that is, the PDU) to the data link layer or MAC layer. The payload (that is, the PDU) includes the payload header and the SDU. After receiving the payload, a data link layer or MAC layer entity parses the payload header to obtain the second indication information, removes the payload header, and transfers the SDU in the payload to the upper layer of the data link layer or MAC layer entity for processing. The payload header may include one or more fields. The data link layer or MAC layer entity obtains related information of the SDU based on the payload header, and delivers the SDU to the upper layer of the data link layer or MAC layer entity for processing.

In step S403, the second communication device sends the first indication information to the first communication device in a synchronization link transmission interval. The data receiving and sending time sequences of the synchronization link and the asynchronous link shown in FIG. 3 are used as examples. During "G>T" transmission of one or more sub-intervals in one synchronization link transmission interval, the second communication device (for example, the main control node G) may add the second indication information to the physical layer header or a higher layer payload header, and send the second indication information to the first communication device.

Optionally, before sending the second indication information, the second communication device may determine whether a condition for indicating the first communication device to start receiving the asynchronous link is met. If it is determined that the condition is met, the second communication device sends the second indication information to the first communication device to indicate the first communication device to start receiving the asynchronous link.

For example, the condition for determining whether to indicate the first communication device to start receiving the asynchronous link may include the following.
(1) Whether to schedule the first communication device or allocate a transmission resource to the first communication device. The second communication device may determine, based on whether to schedule the first communication device or allocate a transmission resource to the first communication device, whether to indicate the first communication device to start the receiving asynchronous link. For example, if the second communication device needs to schedule the first communication device due to a service requirement, the second communication device may indicate the first communication device to start receiving the asynchronous link.
(2) Whether auxiliary information sent by the first communication device indicates that the first communication device can be indicated to start receiving the asynchronous link. The second communication device determines, based on the auxiliary information sent by the first communication device, whether to indicate the first communication device to start receiving the asynchronous link. For example, if the auxiliary information sent by the first communication device indicates that a battery level of the first communication device is sufficient (for example, higher than a set threshold), and the first communication device needs to be scheduled, the first communication device may be indicated to start receiving the asynchronous link.
(3) Whether load of the second communication device is lower than a set threshold. The second communication device determines, based on the load of the second communication device, whether to indicate the first communication device to start receiving the asynchronous link. For example, if the load of the second communication device is low (for example, lower than the set threshold), and scheduling for the first communication device may be allowed, the first communication device may be indicated to start receiving the asynchronous link.
(4) Whether a transmission capability of the first communication device indicates that the first communication device can be indicated to start receiving the asynchronous link. The second communication device determines, based on the transmission capability of the first communication device, whether to indicate the first communication device to start receiving the asynchronous link. For example, if the transmission capability of the first communication device is high, and the scheduling for the first communication device may be performed, the first communication device may be indicated to start receiving the asynchronous link.
(5) Whether power consumption of the second communication device is lower than a set threshold, and/or whether power consumption of the first communication device is lower than a set threshold. The second communication device determines, based on the power consumption of the second communication device and/or the power consumption of the first communication device, whether to indicate the first communication device to start receiving the asynchronous link. For example, if the power consumption of the second communication device is low and/or the power consumption of the first communication device is low, and the scheduling for the first communication device may be allowed, the first communication device may be indicated to start receiving the asynchronous link.

The foregoing determining conditions may be used in any combination. To be specific, when the foregoing two or more conditions are met, the second communication device determines that the first communication device needs to be indicated to start receiving the asynchronous link. For example, if the transmission capability of the first communication device is high, and the power consumption of the first communication device is low, the second communication device indicates the first communication device to start receiving the asynchronous link. It may be understood that the foregoing merely lists several examples of manners of determining whether the first communication device needs to be indicated to start receiving the asynchronous link. Embodiments of this application are not limited to the foregoing manners.

S404: The first communication device starts, based on the second indication information, receiving the asynchronous link.

Optionally, the first communication device may start, based on the second indication information after a second time offset, receiving the asynchronous link. The second time offset may be preconfigured. By setting the second time offset, the first communication device can start a receiving operation on the asynchronous link after a period of time after receiving the second indication information, thereby improving system flexibility.

Optionally, the first communication device may stop, after a second time offset starting from a second moment, receiving the asynchronous link. For example, the second moment may be a moment at which the second indication information is obtained through parsing. For example, if the second indication information is included in the physical layer header of the second synchronization link frame, the first moment may be a moment at which the second indication information is obtained by parsing the physical layer header of the second synchronization link frame. If the second indication information is included in the higher layer payload header of the second synchronization link frame, the second moment may be a moment at which the second indication information is obtained by parsing the higher layer payload header of the second synchronization link frame. Alternatively, the second moment may be a moment at which the second synchronization link frame including the second indication information is received. For example, after receiving the second synchronization link frame, the first communication device records current time as receiving time of the second synchronization link frame. If the second indication information is obtained by parsing the physical layer header or the higher layer payload header of the second synchronization link frame, the recorded receiving time of the second synchronization link frame is used as the second moment.

Optionally, a time length indicated by the second time offset is greater than or equal to 0. When the time length indicated by the second time offset is 0, the first communication device may immediately start, after obtaining the second indication information, receiving the asynchronous link; or when the time length indicated by the second time offset is greater than 0, the first communication device starts, from time at which the second indication information is obtained to time indicated by the second time offset, receiving the asynchronous link. By using the foregoing solution, effective time of an operation of starting receiving the asynchronous link may be flexibly specified.

According to the procedure shown in FIG. 4, the second communication device (for example, the main control node) adds the second indication information to the second synchronization link frame, to indicate the first communication device (for example, the terminal node) to start receiving the asynchronous link. In this way, on a basis of reducing power consumption of the first communication device, this enables the first communication device to start receiving the asynchronous link again, and ensures service transmission of the first communication device.

In some cases, after the second communication device indicates, by using the first indication information in the synchronization link transmission interval, the first communication device to stop receiving the asynchronous link, when the first communication device needs to be scheduled, the second communication device indicates, by using the second indication information in a subsequent synchronization link transmission interval, the first communication device to start receiving the asynchronous link. However, because transmission on the synchronization link is unreliable, the first communication device may not receive the second indication information. To avoid a problem that the first communication device cannot obtain the scheduling information sent by the second communication device because the first communication device stops receiving the asynchronous link for excessively long time due to unreliability of the synchronization link transmission, in embodiments of this application, after the first communication device stops receiving the asynchronous link, if the second indication information sent by the second communication device is not received within specified duration, the first communication device may automatically start receiving the asynchronous link.

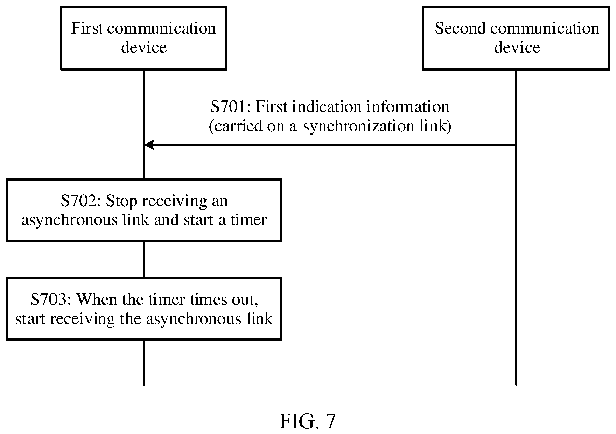

Optionally, the foregoing solution may be implemented by using a timer. For example, FIG. 7 shows a timer-based communication method. As shown in FIG. 7, in S701, a second communication device sends first indication information to a first communication device (for a method for sending the first indication information, refer to the foregoing embodiments). S702: The first communication device stops, based on the first indication information, receiving a synchronization link, and starts the timer.

If the timer is not stopped during running, the timer times out after running for preset duration. The method further includes: S703: When running of the timer times out, the first communication device starts receiving the asynchronous link.

If during the running of the timer, the first communication device receives second indication information sent by the second communication device, the first communication device starts receiving the asynchronous link. In other words, the timer is stopped or turned off.

In the foregoing solution, after the first communication device stops receiving the asynchronous link, if the second indication information indicating to start receiving the asynchronous link is not received within long time, the first communication device may automatically start receiving the asynchronous link, to avoid a problem that receiving the asynchronous link cannot be restarted when the second indication information is lost.

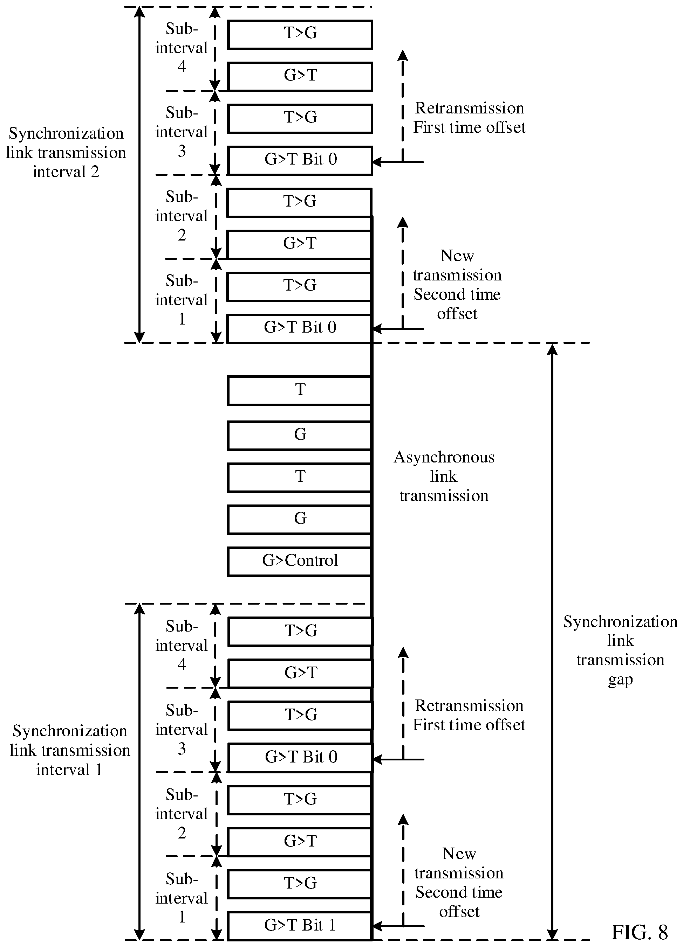

According to embodiments of this application, optionally, when performing new transmission of data for the first communication device, the second communication device may send the second indication information to indicate the first communication device to start receiving the asynchronous link to receive newly transmitted data. When performing data retransmission for the first communication device, the second communication device may send the first indication information to indicate the first communication device to stop receiving the asynchronous link to reduce power consumption. For example, FIG. 8 shows transmission time sequences of a synchronization link and an asynchronous link. As shown in the figure, in a synchronization link transmission interval 1, if a control node G needs to perform new transmission of data to a terminal node T, the control node G sends a bit "1" (namely, the second indication information) in transmission "G>T" in a first sub-interval of the synchronization link transmission interval 1, to indicate the terminal node T to start, after a second time offset, receiving the asynchronous link. Subsequently, if the control node G needs to retransmit data to the terminal node T, the control node G sends a bit "0" (namely, the first indication information) in transmission "G>T" in a third sub-interval of the synchronization link transmission interval 1, to indicate the terminal node T to stop, after a first time offset, receiving the asynchronous link. In the synchronization link transmission interval 1, the terminal node T successively receives the second indication information and the first indication information, and the terminal node T may perform a corresponding operation based on indication information received last time in a same synchronization link transmission interval. For example, as shown in FIG. 7, in the synchronization link transmission interval 1, the terminal node receives the first indication information last, and therefore stops, based on the first indication information after the first time offset, receiving the asynchronous link.

Optionally, in some embodiments, the first indication information may further indicate to stop receiving a control link, and the first communication device may further stop, based on the first indication information, receiving the control link. Optionally, the second indication information may further indicate to start receiving the control link, and the first communication device may further start, based on the second indication information, receiving the control link.

Based on a same technical concept, an embodiment of this application further provides a communication apparatus. The communication apparatus may implement a function of the first communication device in the foregoing embodiments. In some application scenarios, the communication apparatus may be a terminal, for example, may be a smart home device in a smart home application scenario, may be a terminal in a smart transportation scenario, may be a terminal in a smart manufacturing scenario, or may be a smart wearable device.

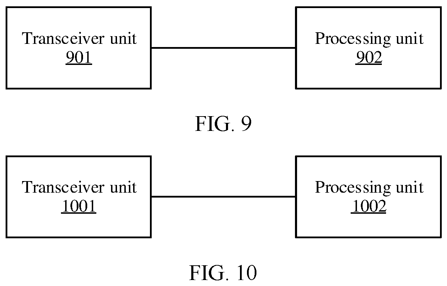

As shown in FIG. 9, the communication apparatus may include a transceiver unit 901 and a processing unit 902. The transceiver unit 901 is configured to receive first indication information sent by a second communication device, where the first indication information is carried on a synchronization link. The processing unit 902 is configured to control, based on the first indication information, the transceiver unit 901 to stop receiving an asynchronous link, where the asynchronous link is associated with the synchronization link.

It should be noted herein that the foregoing communication apparatus provided in this embodiment of this application can implement all or some of the method steps of the first communication device in the foregoing method embodiments, and can achieve a same technical effect. The same part and beneficial effects in this embodiment as those in the method embodiments are not described in detail herein again.

Based on a same technical concept, an embodiment of this application further provides a communication apparatus. The communication apparatus may implement a function of the second communication device in the foregoing embodiments. In some application scenarios, the communication apparatus may be a control device, for example, may be a controller in a smart home application scenario, may be a controller in a smart transportation scenario, or may be a controller in a smart manufacturing scenario.

As shown in FIG. 10, the communication apparatus may include a transceiver unit 1001 and a processing unit 1002. The transceiver unit 1001 is configured to send first indication information to a first communication device, where the first indication information is carried on a synchronization link. The first indication information indicates to stop receiving an asynchronous link, and the asynchronous link is associated with the synchronization link.

It should be noted herein that the foregoing communication apparatus provided in this embodiment of this application can implement all or some of the method steps of the second communication device in the foregoing method embodiments, and can achieve a same technical effect. The same part and beneficial effects in this embodiment as those in the method embodiments are not described in detail herein again.

Based on a same technical concept, an embodiment of this application further provides a terminal. The terminal may implement the method procedures in embodiments of this application. The terminal may be a smart terminal, a smart wearable device, or the like in scenarios such as a smart transportation scenario, a smart home scenario, and a smart manufacturing scenario that can implement the foregoing method procedures in this application. Further, the terminal may include a battery management system (battery management system, BMS) and a battery.

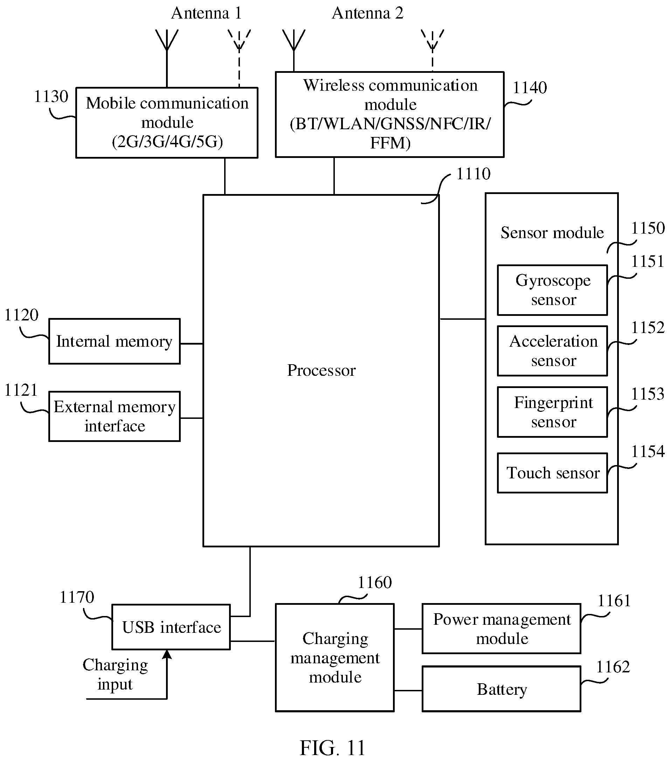

FIG. 11 is a schematic diagram of a structure of a terminal according to an embodiment of this application.

For example, FIG. 11 is a schematic diagram of a possible structure of the terminal. The terminal may include a processor 1110, an external memory interface 1121, an internal memory 1120, a universal serial bus (universal serial bus, USB) interface 1170, an antenna 1, an antenna 2, a mobile communication module 1130, a wireless communication module 1140, and a sensor module 1150, and the sensor module 1150 may include a gyroscope sensor 1151, an acceleration sensor 1152, a fingerprint sensor 1153, and a touch sensor 1154 (certainly, the terminal may further include another sensor, for example, a pressure sensor, an acceleration sensor, a gyroscope sensor, an ambient optical sensor, or a bone conduction sensor, which is not shown in the figure). The terminal further includes a battery management system and a battery 1162. The battery management system may include a charging management module 1160 and a power management module 1161.

It can be understood that the structure shown in this embodiment of this application does not constitute a specific limitation on the terminal. In some other embodiments of this application, the terminal may include more or fewer components than those shown in the figure, or combine some components, or split some components, or have different component arrangements. The components shown in the figure may be implemented by hardware, software, or a combination of software and hardware.

The processor 1110 may include one or more processing units. For example, the processor 1110 may include an application processor (application processor, AP), a modem, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the terminal. The controller may generate an operation control signal based on an instruction operation code and a time sequence signal, to complete control of instruction fetching and instruction execution.

In some embodiments, a memory may be further disposed in the processor 1110, configured to store instructions and data. For example, the memory in the processor 1110 may be a cache. The memory may store instructions or data just used or cyclically used by the processor 1110. If the processor 1110 needs to use the instructions or the data again, the processor 1110 may directly invoke the instructions or the data from the memory. This avoids repeated access, and reduces waiting time of the processor 1110, thereby improving system efficiency.

The internal memory 1120 may be configured to store one or more computer programs, and the one or more computer programs include instructions. The processor 1110 executes various functional applications of the terminal and data processing by running the instructions stored in the internal memory 1120. The internal memory 1120 may include a program storage area and a data storage area. The program storage area may store code of an operating system, code of an application program, and the like.

In addition, the internal memory 1120 may include a high-speed random access memory, and may further include a nonvolatile memory, for example, one or more disk storage devices, a flash storage device, or a universal flash storage (universal flash storage, UFS). In some embodiments, the processor 1110 may run the instructions stored in the internal memory 1120 and/or the instructions stored in the memory disposed in the processor 1110, so that the terminal performs the methods provided in embodiments of this application.

Certainly, information such as code and other data that are used to execute the method procedures and provided in embodiments of this application may be further stored in an external memory. In this case, the processor 1110 may run, by using the external memory interface 1121, code stored in the external memory.

The external memory interface 1121 may be configured to connect to an external memory card (for example, a micro SD card), to expand a storage capability of the terminal. The external memory card communicates with the processor 1110 through the external memory interface 1121, to implement a data storage function.

A wireless communication function of the terminal may be implemented by using the antenna 1, the antenna 2, the mobile communication module 1130, the wireless communication module 1140, the modem processor, the baseband processor, and the like.

The antenna 1 and the antenna 2 are configured to transmit and receive electromagnetic wave signals.

The mobile communication module 1130 may provide a wireless communication solution that is applied to the terminal and that includes 2G, 3G, 4G, 5G, and the like.

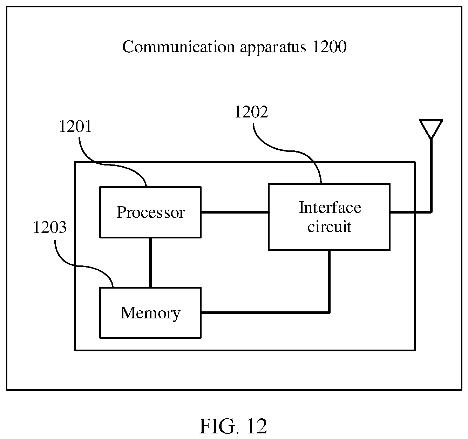

Based on a same technical concept, an embodiment of this application further provides a communication apparatus. The communication apparatus may have a structure shown in FIG. 12. The communication apparatus may be a device, a chip, or a chip system for implementing the foregoing methods.

The communication apparatus 1200 shown in FIG. 12 may include at least one processor 1201 and an interface circuit 1202. The interface circuit 1202 may be configured to support the communication apparatus 1200 in receiving or sending signaling or data. For example, the interface circuit 1202 may be used by the communication apparatus 1200 to perform the step of sending the first indication information by the second communication device in the method shown in FIG. 4 or FIG. 7, or the step of receiving the first indication information by the second communication device. The at least one processor 1201 is configured to implement steps related to the first communication device and/or the second communication device in the methods provided in the foregoing embodiments of this application, for example, may be configured to stop, based on the first indication information, receiving an asynchronous link.

Optionally, the communication apparatus 1200 may further include a memory 1203, where the memory 1203 stores a computer program and instructions. The memory 1203 may be coupled to the processor 1201 and/or the interface circuit 1202, and is configured to support the processor 1201 in invoking the computer program and the instructions in the memory 1203, to implement steps related to the first communication device or the second communication device in the methods provided in embodiments of this application. In addition, the memory 1203 may be further configured to store data related to the method embodiments of this application. For example, the memory 1203 is configured to store data and instructions that are necessary for supporting interaction implemented by the interface circuit 1202, and/or is configured to store configuration information that is necessary for the communication apparatus 1200 to perform the methods in embodiments of this application.

Based on a same concept as the foregoing method embodiments, an embodiment of this application further provides a computer-readable storage medium. The computer-readable storage medium stores some instructions. When these instructions are invoked and executed by a computer, the computer may be enabled to perform the method in any one of the foregoing method embodiments or possible designs of the method embodiments. In embodiments of this application, no limitation is imposed on the computer-readable storage medium. For example, the computer-readable storage medium may be a random access memory (random access memory, RAM), a read-only memory (read-only memory, ROM), or the like.

Based on a same concept as that in the foregoing method embodiments, this application further provides a computer program product. When the computer program is invoked and executed by a computer, the computer program product may complete the methods in the method embodiments and any possible design of the foregoing method embodiments.

"Coupled" means that two components are directly or indirectly connect to each other. This connection may be fixed or movable, and the connection may allow a fluid, electricity, an electrical signal or another type of signal to communicate between the two components.

All or some of the foregoing embodiments may be implemented by using software, hardware, firmware, or any combination thereof. When software is used for implementation, all or part of the implementation may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logical units and circuits described in embodiments of this application may be used by using a general purpose processor, a digital signal processor, an applicationspecific integrated circuit (ASIC), a field programmable gate array (FPGA) or another programmable logic apparatus, a discrete gate or transistor logic, a discrete hardware component, or any combination of the foregoing is designed to implement or operate the described functions. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors combined with a digital signal processor core, or any other similar configuration.

While the present invention has been described with reference to specific features and embodiments thereof, it is apparent that various modifications and combinations thereof may be made without departing from the scope of the present invention. Correspondingly, the specification and the accompanying drawings are merely examples of descriptions of the present invention defined by the appended claims. Apparently, those skilled in the art can make various changes and variations to the present invention without departing from the scope of the invention. Thus, the present invention is intended to cover such modifications and variations of the invention to the extent that they fall within the scope of the claims of the present invention.

## Claims

1. A communication method, comprising:
receiving (S401, S701) first indication information from a second communication device, wherein the first indication information is carried on a synchronization link, **characterized in that**
the first indication information indicates that scheduling for a first communication device does not exist on an asynchronous link associated with the synchronization link; and
stopping (S402, S702), based on the first indication information, detecting the asynchronous link.

2. The method according to claim 1, wherein the first indication information is comprised in a physical layer header of a first synchronization link frame; and
the method further comprises:
parsing the physical layer header of the first synchronization link frame; and
obtaining the first indication information from the physical layer header of the first synchronization link frame.

3. The method according to claim 1, wherein the first indication information is comprised in a higher layer payload header of a first synchronization link frame; and
the method further comprises:
parsing the higher layer payload header of the first synchronization link frame; and
obtaining the first indication information from the higher layer payload header of the first synchronization link frame.

4. The method according to any one of claims 1 to 3, wherein the stopping, based on the first indication information, detecting the asynchronous link comprises:
stopping, based on the first indication information after a first time offset, detecting the asynchronous link.

5. The method according to any one of claims 1 to 4, wherein the first indication information further indicates to stop receiving a control link; and
the method further comprises:
stopping, based on the first indication information, receiving the control link.

6. The method according to any one of claims 1 to 5, wherein after the receiving first indication information from the second communication device, the method further comprises:
starting a timer (S702); and
if running of the timer times out, starting (S703) detecting the asynchronous link.

7. The method according to any one of claims 1 to 5, wherein after the receiving first indication information from the second communication device, the method further comprises:
starting a timer; and
if second indication information sent by the second communication device is received during running of the timer, starting detecting the asynchronous link.

8. The method according to any one of claims 1 to 5, wherein after the stopping, based on the first indication information, detecting the asynchronous link, the method further comprises:
receiving (S403) second indication information from the second communication device; and
starting (S404), based on the second indication information, detecting the asynchronous link.

9. The method according to claim 7 or 8, wherein the second indication information is comprised in a physical layer header of a second synchronization link frame; and
the method further comprises:
parsing the physical layer header of the second synchronization link frame; and
obtaining the second indication information from the physical layer header of the second synchronization link frame.

10. The method according to claim 7 or 8, wherein the second indication information is comprised in a higher layer payload header of a second synchronization link frame; and
the method further comprises:
parsing the higher layer payload header of the second synchronization link frame; and
obtaining the second indication information from the higher layer payload header of the second synchronization link frame.

11. The method according to any one of claims 8 to 10, wherein the starting, based on the second indication information, detecting the asynchronous link comprises:
starting, based on the second indication information after a second time offset, detecting the asynchronous link.

12. The method according to any one of claims 8 to 11, wherein the second indication information further indicates to start receiving a control link; and
the method further comprises:
starting, based on the second indication information, receiving the control link.

13. A communication apparatus (1200), comprising one or more processors (1201) and an interface circuit (1202), wherein when instructions of one or more computer programs are executed by the one or more processors, the communication apparatus is enabled to perform the method according to any one of claims 1 to 12.

14. A computer-readable storage medium, wherein the computer-readable storage medium comprises a computer program, and when the computer program runs on a computing device, the computing device is enabled to perform the method according to any one of claims 1 to 12.

15. A computer program product, wherein when the computer program product is invoked by a computer, the computer is enabled to perform the method according to any one of claims 1 to 12.

## Patentansprüche

1. Kommunikationsverfahren, umfassend:
Empfangen (S401, S701) erster Anzeigeinformationen von einer zweiten Kommunikationsvorrichtung, wobei die ersten Anzeigeinformationen über eine Synchronisationsverbindung übertragen werden,
**dadurch gekennzeichnet, dass** die ersten Anzeigeinformationen anzeigen, dass keine Planung für eine erste Kommunikationsvorrichtung über eine mit der Synchronisationsverbindung assoziierte asynchrone Verbindung existiert; und
Anhalten (S402, S702) des Detektierens der asynchronen Verbindung basierend auf den ersten Anzeigeinformationen.

2. Verfahren nach Anspruch 1, wobei die ersten Anzeigeinformationen in einem Header der physikalischen Ebene eines ersten Synchronisationsverbindungsrahmens enthalten sind; und
das Verfahren ferner Folgendes umfasst:
Analysieren des Headers der physikalischen Ebene des ersten Synchronisationsverbindungsrahmens; und
Erlangen der ersten Anzeigeinformationen aus dem Header der physikalischen Ebene des ersten Synchronisationsverbindungsrahmens.

3. Verfahren nach Anspruch 1, wobei die ersten Anzeigeinformationen in einem Nutzlast-Header der höhere Ebene eines ersten Synchronisationsverbindungsrahmens enthalten sind; und
das Verfahren ferner Folgendes umfasst:
Analysieren des Nutzlast-Headers der höheren Ebene des ersten Synchronisationsverbindungsrahmens; und
Erlangen der ersten Anzeigeinformationen aus dem Nutzlast-Header der höheren Ebene des ersten Synchronisationsverbindungsrahmens.

4. Verfahren nach einem der Ansprüche 1 bis 3, wobei das Anhalten des Detektierens der asynchronen Verbindung basierend auf den ersten Anzeigeinformationen Folgendes umfasst:
Anhalten des Detektierens der asynchronen Verbindung basierend auf den ersten Anzeigeinformationen nach einem ersten Zeitversatz.

5. Verfahren nach einem der Ansprüche 1 bis 4, wobei die ersten Anzeigeinformationen ferner anweisen, das Empfangen einer Steuerungsverbindung anzuhalten; und
das Verfahren ferner Folgendes umfasst:
Anhalten des Empfangens der Steuerungsverbindung basierend auf den ersten Anzeigeinformationen.

6. Verfahren nach einem der Ansprüche 1 bis 5, wobei das Verfahren nach dem Empfangen erster Anzeigeinformationen von der zweiten Kommunikationsvorrichtung ferner Folgendes umfasst:
Starten eines Zeitgebers (S702); und
sofern die Ausführung des Zeitgebers abläuft, Starten (S703) des Detektierens der asynchronen Verbindung.

7. Verfahren nach einem der Ansprüche 1 bis 5, wobei das Verfahren nach dem Empfangen erster Anzeigeinformationen von der zweiten Kommunikationsvorrichtung ferner Folgendes umfasst:
Starten eines Zeitgebers; und
sofern zweite Anzeigeinformationen, die durch die zweite Kommunikationsvorrichtung gesendet werden, während der Ausführung des Zeitgebers empfangen werden, Starten des Detektierens der asynchronen Verbindung.

8. Verfahren nach einem der Ansprüche 1 bis 5, wobei das Verfahren nach dem Anhalten des Detektierens der asynchronen Verbindung basierend auf den ersten Anzeigeinformationen ferner Folgendes umfasst:
Empfangen (S403) zweiter Anzeigeinformationen von der zweiten Kommunikationsvorrichtung; und
Starten (S404) des Detektierens der asynchronen Verbindung basierend auf den zweiten Anzeigeinformationen.

9. Verfahren nach Anspruch 7 oder 8, wobei die zweiten Anzeigeinformationen in einem Header der physikalischen Ebene eines zweiten Synchronisationsverbindungsrahmens enthalten sind; und
das Verfahren ferner Folgendes umfasst:
Analysieren des Headers der physikalischen Ebene des zweiten Synchronisationsverbindungsrahmens; und
Erlangen der zweiten Anzeigeinformationen aus dem Header der physikalischen Ebene des zweiten Synchronisationsverbindungsrahmens.

10. Verfahren nach Anspruch 7 oder 8, wobei die zweiten Anzeigeinformationen in einem Nutzlast-Header der höheren Ebene eines zweiten Synchronisationsverbindungsrahmens enthalten sind; und
das Verfahren ferner Folgendes umfasst:
Analysieren des Nutzlast-Headers der höheren Ebene des zweiten Synchronisationsverbindungsrahmens; und
Erlangen der zweiten Anzeigeinformationen aus dem Nutzlast-Header der höheren Ebene des zweiten Synchronisationsverbindungsrahmens.

11. Verfahren nach einem der Ansprüche 8 bis 10, wobei das Starten des Detektierens der asynchronen Verbindung basierend auf den zweiten Anzeigeinformationen Folgendes umfasst:
Starten des Detektierens der asynchronen Verbindung basierend auf den zweiten Anzeigeinformationen nach einem zweiten Zeitversatz.

12. Verfahren nach einem der Ansprüche 8 bis 11, wobei die zweiten Anzeigeinformationen ferner anweisen, das Empfangen einer Steuerungsverbindung zu starten; und
das Verfahren ferner Folgendes umfasst:
Starten des Empfangens der Steuerungsverbindung basierend auf den zweiten Anzeigeinformationen.

13. Kommunikationseinrichtung (1200), umfassend einen oder mehrere Prozessoren (1201) und eine Schnittstellenschaltung (1202), wobei, wenn Anweisungen eines oder mehrerer Computerprogramme durch den einen oder die mehreren Prozessoren ausgeführt werden, die Kommunikationseinrichtung in die Lage versetzt wird, das Verfahren nach einem der Ansprüche 1 bis 12 durchzuführen.

14. Computerlesbares Speichermedium, wobei das computerlesbare Speichermedium ein Computerprogramm umfasst, und, wenn das Computerprogramm auf einer Rechenvorrichtung läuft, die Rechenvorrichtung in die Lage versetzt wird, das Verfahren nach einem der Ansprüche 1 bis 12 durchzuführen.

15. Computerprogrammprodukt, wobei, wenn das Computerprogrammprodukt durch einen Computer aufgerufen wird, der Computer in die Lage versetzt wird, das Verfahren nach einem der Ansprüche 1 bis 12 durchzuführen.

## Revendications

1. Procédé de communication, comprenant :
la réception (S401, S701) de premières informations d'indication provenant d'un second dispositif de communication, dans lequel les premières informations d'indication sont transmises sur une liaison de synchronisation, **caractérisé en ce que** les premières informations d'indication indiquent qu'aucune planification pour un premier dispositif de communication n'existe sur une liaison asynchrone associée à la liaison de synchronisation ; et
l'arrêt (S402, S702), sur la base des premières informations d'indication, de la détection de la liaison asynchrone.

2. Procédé selon la revendication 1, dans lequel les premières informations d'indication sont comprises dans un en-tête de couche physique d'une première trame de liaison de synchronisation ; et le procédé comprend en outre :
l'analyse de l'en-tête de couche physique de la première trame de liaison de synchronisation ; et
l'obtention des premières informations d'indication provenant de l'en-tête de couche physique de la première trame de liaison de synchronisation.

3. Procédé selon la revendication 1, dans lequel les premières informations d'indication sont comprises dans un en-tête de charge utile de couche supérieur d'une première trame de liaison de synchronisation ; et
le procédé comprend en outre :
l'analyse de l'en-tête de charge utile de couche supérieur de la première trame de liaison de synchronisation ; et
l'obtention des premières informations d'indication provenant de l'en-tête de charge utile de couche supérieure de la première trame de liaison de synchronisation.

4. Procédé selon l'une quelconque des revendications 1 à 3, dans lequel l'arrêt, sur la base des premières informations d'indication, de la détection de la liaison asynchrone comprend en outre :
l'arrêt, sur la base des premières informations d'indication après un premier décalage temporel, de la détection de la liaison asynchrone.

5. Procédé selon l'une quelconque des revendications 1 à 4, dans lequel les premières informations d'indication indiquent en outre d'arrêter la réception d'une liaison de commande ; et
le procédé comprend en outre :
l'arrêt, sur la base des premières informations d'indication, de la réception de la liaison de commande.

6. Procédé selon l'une quelconque des revendications 1 à 5, dans lequel après la réception de premières informations d'indication provenant du second dispositif de communication, le procédé comprend en outre :
le démarrage d'une temporisation (S702) ; et
si la temporisation arrive à expiration, le démarrage (S703) de la détection de la liaison asynchrone.

7. Procédé selon l'une quelconque des revendications 1 à 5, dans lequel après la réception de premières informations d'indication provenant du second dispositif de communication, le procédé comprend en outre :
le démarrage d'une temporisation ; et
si de secondes informations d'indication envoyée par le second dispositif de communication sont reçues pendant la temporisation, le démarrage de la détection de la liaison asynchrone.

8. Procédé selon l'une quelconque des revendications 1 à 5, dans lequel après l'arrêt, sur la base des premières informations d'indication, de la détection de la liaison asynchrone, le procédé comprend en outre :
la réception (S403) de secondes informations d'indication provenant du second dispositif de communication ; et
le démarrage (S404), sur la base des secondes informations d'indication, de la détection de la liaison asynchrone.

9. Procédé selon la revendication 7 ou 8, dans lequel les secondes informations d'indication sont comprises dans un en-tête de couche physique d'une seconde trame de liaison de synchronisation ; et le procédé comprend en outre :
l'analyse de l'en-tête de couche physique de la seconde trame de liaison de synchronisation ; et
l'obtention des secondes informations d'indication provenant de l'en-tête de couche physique de la seconde trame de liaison de synchronisation.

10. Procédé selon la revendication 7 ou 8, dans lequel les secondes informations d'indication sont comprises dans un en-tête de charge utile de couche supérieure d'une seconde trame de liaison de synchronisation ; et
le procédé comprend en outre :
l'analyse de l'en-tête de charge utile de couche supérieure de la seconde trame de liaison de synchronisation ; et
l'obtention des secondes informations d'indication provenant de l'en-tête de charge utile de couche supérieure de la seconde trame de liaison de synchronisation.

11. Procédé selon l'une quelconque des revendications 8 à 10, dans lequel le démarrage, sur la base des secondes informations d'indication, de la détection de la liaison asynchrone comprend : le démarrage, sur la base des secondes informations d'indication après un second décalage temporel, de la détection de la liaison asynchrone.

12. Procédé selon l'une quelconque des revendications 8 à 11, dans lequel les secondes informations d'indication indiquent en outre de démarrer la réception d'une liaison de commande ; et
le procédé comprend en outre :
le démarrage, sur la base des secondes informations d'indication, de la réception de la liaison de commande.

13. Appareil de communication (1200), comprenant un ou plusieurs processeurs (1201) et un circuit d'interface (1202), dans lequel, lorsque les instructions d'un ou plusieurs programmes informatiques sont exécutées par les un ou plusieurs processeurs, l'appareil de communication est activé pour réaliser le procédé selon l'une quelconque des revendications 1 à 12.

14. Support de stockage lisible par ordinateur, dans lequel le support de stockage lisible par ordinateur comprend un programme informatique, et lorsque le programme informatique est exécuté sur un dispositif informatique, le dispositif informatique est activé pour réaliser le procédé selon l'une quelconque des revendications 1 à 12.

15. Produit de programme informatique, dans lequel lorsque le produit de programme informatique est exécuté par un ordinateur, l'ordinateur est activé pour réaliser le procédé selon l'une quelconque des revendications 1 à 12.
